# EUROPEAN PATENT SPECIFICATION

(11) **EP 3 751 501 B1**
(45) Date of publication and mention of the grant of the patent: **08.11.2023**
(21) Application number: 18900641.4
(22) Date of filing: 12.11.2018
(51) Int. Cl.: G06Q 50/02, A01B 79/00, A01B 76/00

(54) **AGRICULTURE SUPPORT SYSTEM**
LANDWIRTSCHAFTLICHES UNTERSTÜTZUNGSSYSTEM
SYSTÈME DE SOUTIEN À L'AGRICULTURE

(30) Priority: 22.01.2018 JP 2018008281
(43) Date of publication of application: 16.12.2020
(73) Proprietor: KUBOTA CORPORATION, Osaka-shi, Osaka 556-8601 (JP)
(72) Inventor: SASAMOTO, Hirokazu, Sakai-shi, Osaka 590-0823 (JP); SHIMAMOTO, Izuru, Sakai-shi, Osaka 590-0823 (JP); UNESAKI, Akinori, Sakai-shi, Osaka 590-0823 (JP); YOSHIMOTO, Yoshiharu, Sakai-shi, Osaka 590-0823 (JP)
(74) Representative: Bittner, Thomas L.
(86) International application number: PCT/JP2018/041815
(87) International publication number: WO 2019/142467

(56) References cited:
- EP-A1- 2 946 651
- EP-A1- 3 043 310
- WO-A1-2015/119263
- WO-A1-2015/119263
- WO-A1-2016/060107
- WO-A1-2016/060107
- WO-A1-2017/056584
- JP-A- 2014 068 580
- JP-A- 2014 068 580
- JP-A- 2014 187 907
- JP-A- 2014 187 907
- JP-A- 2017 134 747
- JP-A- 2017 134 747

## Description

The present invention relates to an agriculture support system.

### [BACKGROUND ART]

Patent Document JP 6122739 is known as a system for supporting the agricultural work to be performed by an agriculture machine.

The server of JP 6122739 includes a work plan setting means to set a work plan including crops, a plurality of agricultural fields, agricultural works, agricultural work periods for the agricultural works, and includes a work content planning means including the agricultural works and dates.

The document EP 2 946 651 A1 discloses a farm work machine operable in a variety of work modes including a communications unit that reads farm work information for a selected target farm work sector from a database of a management center storing the farm work information for each farm work sector, a work mode setting unit which sets work modes, a work mode comparison unit that effects comparison between a set work mode set by the work mode setting unit and a registered work mode included in farm work information read from the database, and a display data generation unit that generates display data in order to display, on a display, the read farm work information and a result of the comparison effected by the mode comparison unit.

According to the document JP 2017 134747 A, in a farm work management system, an agricultural machine comprises an information management terminal which acquires various work data of the agricultural machine or positional information of the agricultural machine, and a work plan is introduced being inputted directly or through a net line or the like to a portable terminal that is provided communicable with the information management terminal. Work suitability discrimination means is configured to determine whether work is suitable for a predetermined work plan when starting work by an agricultural machine in accordance with data relating to the agricultural machine, the various work data and the positional data that are acquired by the information management terminal. If it is determined by the work suitability discrimination means that the work is not suitable, work interruption is output or an alarm is output.

The document EP 3 043 310 A1 relates to an agriculture support system including an operation contents creation part configured to create an operation contents, the operation contents being carried out in an agricultural field; an operation instruction part configured to send the operation contents to a mobile terminal allocated to the agricultural operator; an operation contents storage part configured to storage the operation contents; a first display part configured to display the operation contents on the mobile terminal, the operation contents being sent by the operation instruction part; a notification part configured to notify an external device of completion of confirming the operation contents, the operation contents being displayed on the mobile terminal, the external device being different from the mobile terminal; and a second display part configured to display the operation contents on the external device, the operation contents being already confirmed by the notification part.

The document WO 2017/056584 A1 discloses a field management system equipped with a map data recording unit having a field map layer for recording field map data; a field work data recording unit having a type-separated field work layer for recording field work data generated for each task performed on a field using various agricultural machines; a data management unit for managing the field map data and the field work data at a common coordinate location; and an assessment unit for assessing the agricultural operation of the field on the basis of the field work data.

### [DISCLOSURE OF THE INVENTION]

### [PROBLEMS TO BE SOLVED BY THE INVENTION]

In JP 6122739, a work plan, work contents, and the like can be created on the server side, and the work plan and the work contents can be transmitted to the mobile terminal. The work plan and the work contents are transmitted to the mobile terminal, so that an operator can check the work plan and work contents, which is a useful technique for performing an agricultural work. However, according to JP 6122739, it is difficult to confirm the work content and the work plan when the mobile terminal is not possessed, and in this case, it is actually difficult to determine, on the agriculture machine side, whether the work contents and the work plan can be performed.

In view of the problems mentioned above, the present invention intends to provide an agriculture support system configured to allow an operator or the like to easily confirm items relating to execution of an agricultural work on an agriculture machine side.

### [MEANS OF SOLVING THE PROBLEMS]

Technical means of the present invention for solving this technical problem are provided by an agricultural support machine according to the independent claim 1.

### [EFFECTS OF THE INVENTION]

According to the invention, an operator and the like can easily confirm items relating to execution of an agricultural work on an agriculture machine side.

### [BRIEF DESCRIPTION OF THE DRAWINGS]

- FIG. 1: is a schematic diagram of an agriculture support system according to an embodiment of the present invention.
- FIG. 2: is a schematic diagram showing transmission of agricultural map data according to the embodiment.
- FIG. 3: is a view illustrating an example of a creation screen M1 according to the embodiment.
- FIG. 4: is a view showing registration of an agricultural field according to the embodiment.
- FIG. 5: is a view illustrating a relation between the agricultural map data, an agricultural map, and a management number according to the embodiment.
- FIG. 6: is a view illustrating an image of the agricultural map according to the embodiment.
- FIG. 7: is a view illustrating an example of a work plan screen M3 according to the embodiment.
- FIG. 8A: is a view illustrating a screen M2 of a case where model numbers of a working device are matched with according to the embodiment.
- FIG. 8B: is a view illustrating the screen M2 of a case where model numbers of the working device are not matched with according to the embodiment.
- FIG. 9A: is a view illustrating an example of an operation map displayed in a first area according to the embodiment.
- FIG. 9B: is a view illustrating another example of the operation map of a case where an operation is interrupted according to the embodiment.
- FIG. 10: is an explanation view explaining judgment to the operation according to the embodiment.
- FIG. 11A: is a view illustrating an example of display of a case where the operation is finished in discordance with the work plan according to the embodiment.
- FIG. 11B: is a view illustrating an example of display of a case where the operation is finished in accordance with the work plan according to the embodiment.
- FIG. 12: is a view illustrating an example of a layer map screen M4 according to the embodiment.

### [BEST MODE FOR CARRYING OUT THE INVENTION]

Hereinafter, an embodiment of the present invention will be described with reference to the drawings as appropriate.

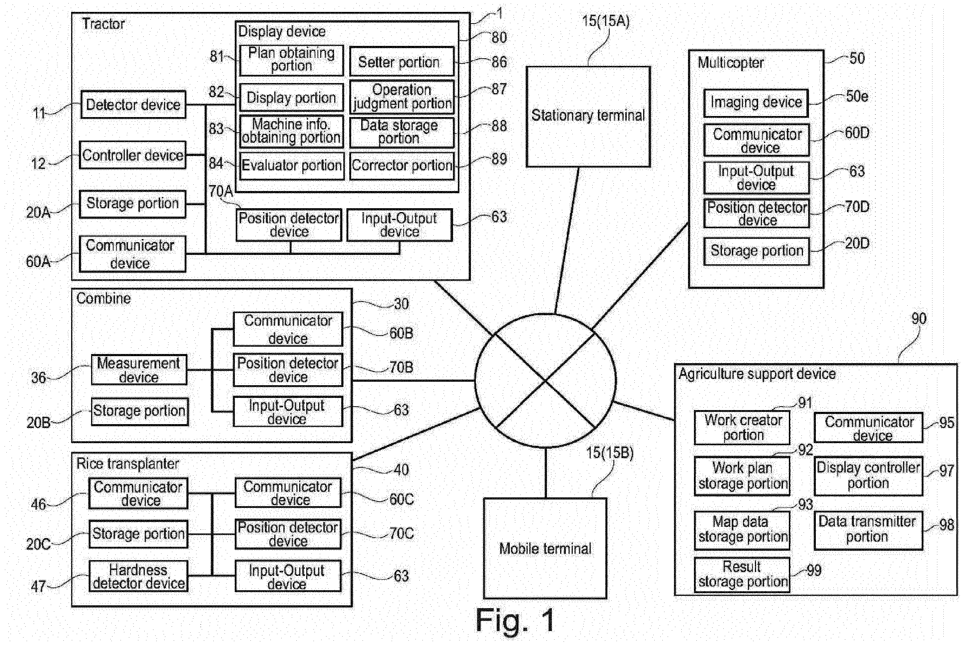

An agricultural support system is a system for supporting an agricultural work. In the agricultural support system, as illustrated in FIG. 1, a display device 80 provided on the agriculture machine, for example, acquires various types of information from the agriculture support device 90 to support the agricultural work to be executed by the agriculture machine. The agriculture machine is a tractor or a rice transplanter provided with a working device such as an implement, a combine for the harvesting, or the like. The agriculture machine 1 mentioned above is just an example and is not limited thereto.

First, an agriculture machine will be described employing the tractor 1 as an example.

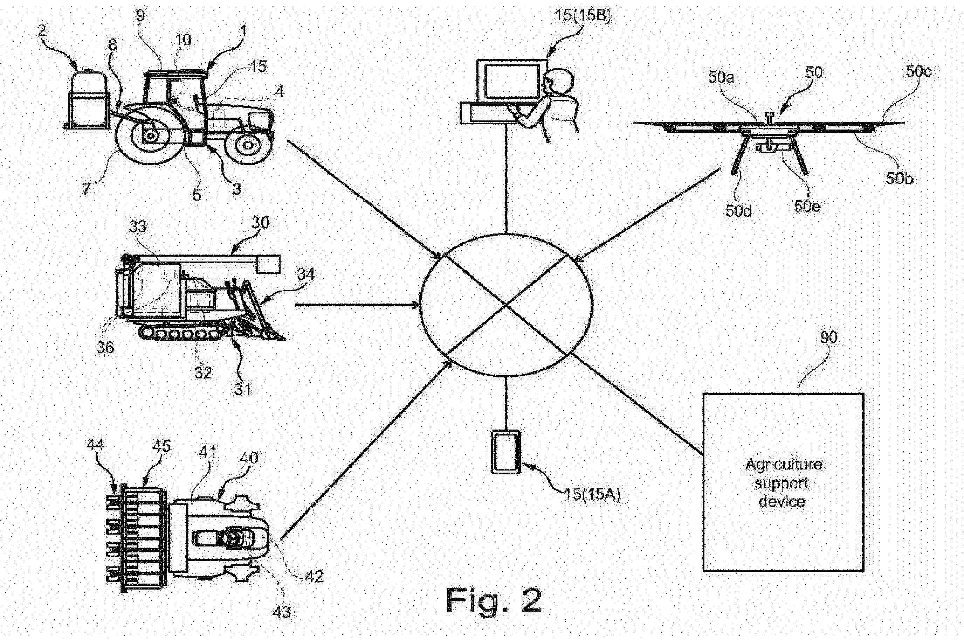

As shown in FIG. 2, the tractor 1 includes a traveling vehicle (a traveling vehicle body) 3 having a traveling device 7, a prime mover 4, and a transmission device 5. The traveling device 7 is a tire-type traveling device or a crawler-type traveling device. The prime mover 4 is a diesel engine, an electric motor, or the like. The transmission device 5 is capable of switching the propulsion force of the traveling device 7 through shifting of speeds, and is capable of switching the traveling device 7 between the forward traveling and the reverse traveling. The traveling vehicle 3 is provided with a cabin 9, and an operator seat 10 is provided inside the cabin 9.

In addition, a coupler portion 8 constituted of a three-point link mechanism is provided at a rear portion of the traveling vehicle 3. The working device 2 is configured to be attached to/detached from the coupler portion 8. By coupling the working device 2 to the coupler portion 8, the working device 2 can be towed by the traveling vehicle 3. The working device 2 includes a tiller device for tilling, a fertilizer sprayer device for spraying fertilizer, a pesticide sprayer device for spraying pesticides, a harvester device for harvesting, a mower device for cutting grass and the like, a tedder device for tedding grass and the like, a rake device for raking grass and the like, a bailer device for bailing grass and the like, and the like.

As shown in FIG. 1, the tractor 1 includes a detector device 11 and a controller device 12. The detector device 11 is a device configured to detect the state of the tractor 1, and a device including sensors such as an accelerator pedal sensor, a shift lever detector sensor, a crank position sensor, a fuel sensor, a water temperature sensor, an engine revolving sensor, a steering angle sensor, an oil temperature sensor, an axle revolving sensor, an operation extent detector sensor and including switches such as an ignition switch, a parking brake switch, a PTO switch, and an operation switch. The controller device 12 is a device for controlling the tractor, and is constituted of a CPU or the like. The controller device 12 controls the traveling system of the tractor 1 and the working system of the tractor 1 based on the detection values detected by the detector device 11 and the like. For example, the controller device 12 detects the operation extent of the operation tool for moving the coupler portion 8 up and down with the operation extent detector sensor, performs the control to move the coupler portion 8 up and down based on the operation extent, and control a revolving speed of the diesel engine based on the operation extent detected by the accelerator pedal sensor. The controller device 12 only needs to control the working system of the tractor 1 and the traveling system of the tractor 1, and the control method is not limited.

The tractor 1 includes a communicator device 60A. The communicator device 60A is a communication module configured to perform either the direct communication or the indirect communication with the agriculture support device 90, and is configured to perform the wireless communication in accordance with the Wi-Fi (Wireless Fidelity, a registered trademark) of the IEEE 802.11 series which is a communication standard, the BLE (Bluetooth (a registered trademark) Low Energy), the LPWA (Low Power, Wide Area), the LPWAN (Low-Power Wide-Area Network), or the like. In addition, the communicator device 60A is capable of performing the wireless communication through a mobile phone communication network or a data communication network, for example.

The tractor 1 includes a position detector device 70A. The position detector device 70A is mounted on a top plate of the cabin 9 of the traveling vehicle 3. The position detector device 70A is mounted on the top plate of the cabin 9. However, the mounting position in the traveling vehicle 3 is not limited thereto, and may be another position. In addition, the position detector device 70A may be attached to the working device 2.

The position detector device 70A is a device configured to detect its own position (the positioning information that includes latitude and longitude) in accordance with a satellite positioning system. That is, the position detector device 70A receives the signals (the position of positioning satellite, the transmission time, the correction information, and the like) transmitted from the positioning satellite, and then detects the position (latitude and longitude) based on the received signal. The position detector device 70A may detect, as own position (latitude and longitude), a position corrected based on a signal such as a correction transmitted from a ground station (a reference station) capable of receiving a signal transmitted from the positioning satellite. In addition, the position detector device 70A may include an inertial measurement device such as a gyro sensor or an acceleration sensor, and may detect the position corrected by the inertial measurement device as its own position.

The tractor 1 includes a display device 80. The display device 80 is a device configured to display various types of information, and is a device having any one of a liquid crystal panel, a touch panel, and other panels. The display device 80 is connected to the detector device 11, the controller device 12, the communicator device 60A, and the position detector device 70A through the in-vehicle network. The display device 80 is configured to acquire and display a work plan of the agricultural work that is created by the agriculture support device 90 through the communicator device 60A or the like. Any one of the controller device 12, the communicator device 60A, and the display device 80 sequentially stores a detection value detected by the detector device 11, a position (a detected position) detected by the position detector device 70A, information relating to the work transmitted from the working device 2, and the like at least under the state where the tractor 1 is operating, are stores the sequentially-stored information is stored as work results.

As shown in FIG. 1, the agriculture support device 90 is a server installed in, for example, a farmer, a farming company, an agriculture machine constructor, an agricultural service provider, or the like. The agriculture support device 90 includes a work creator portion 91 and a storage portion (a work plan storage portion) 92. The work creator portion 91 is constituted of electric/electronic parts provided in the agriculture support device 90, programs stored in the agriculture support device 90, or the like. The work plan storage portion 92 is constituted of a nonvolatile memory or the like.

The work creator portion 91 creates a work plan for agricultural work to be performed by an agriculture machine such as the tractor 1. The work plan is information indicating contents in which an agricultural field, an agricultural work, and a work date are associated with each other. The agricultural work is, for example, seedbed soil making, ridge plastering, tilling, seeding, fertilizing, rice planting, ploughing and irrigating, grooving, weeding, topdressing, harvesting, and the like.

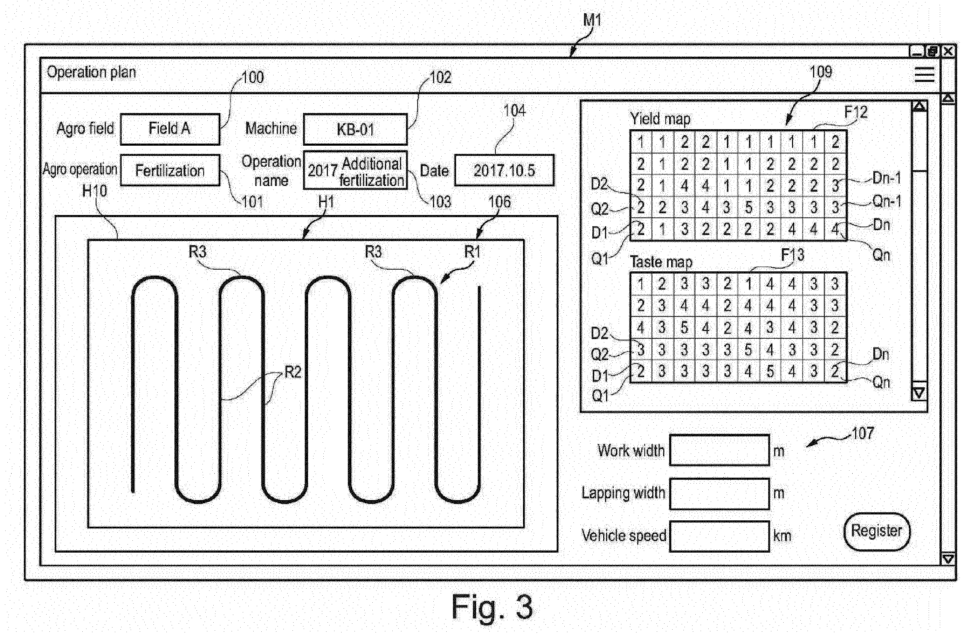

As shown in FIG. 1 and FIG. 3, when the external terminal 15 is connected to the agriculture support device 90 and the external terminal 15 requests to create a work plan, the work creator portion 91 displays a creation screen M1 on the external terminal 15 in response to the request. The external terminal 15 is a personal computer, a smartphone, a tablet computer, a PDA, or the like. The external terminal 15 is divided into a stationary terminal 15A that is a personal computer and a mobile terminal 15B that is a smartphone, a tablet computer, and a PDA. For convenience of the explanation, the stationary terminal 15A and the mobile terminal 15B may be selectively employed to distinguish the external terminals 15.

The creation screen M1 displays an agricultural field input portion 100 for inputting an agricultural field where an agricultural work is executed, a work input portion 101 for inputting the agricultural work, a machine input portion 102 for inputting a machine, a name input portion 103 for inputting a name of the agricultural work, and a time input portion 104 for inputting a time. To the agricultural field input portion 100, information for specifying an agricultural field, for example, an agricultural field name, an agricultural field management number, and the like are inputted. To the work input portion 101, the agricultural work such as the seedbed soil making, the ridge plastering, the tilling, the seeding, the fertilizing, the rice planting, the ploughing and irrigating, the grooving, the weeding, the topdressing, and the harvesting are inputted. To the machine input portion 102, the model number, model, name and the like of the agriculture machine can be inputted, for example, the model number, model, name and the like of the working device 2 to be connected to the tractor 1 and the like are inputted. To the name input portion 103, an arbitrary name is inputted for the operator or the like to identify. To the time input portion 104, a work date, a work time, and the like for performing the agricultural work are inputted.

Thus, the work creator portion 91 can create, as the work plan, an agricultural field, an item of agricultural work, a model number, a model, a name of an agriculture machine (a working device) for performing the agricultural work, a work date for performing the agricultural work, and the like.

In addition, the work creator portion 91 can set not only the items of the agricultural work but also the procedure of the agricultural work as the work plan. The work creator portion 91 displays, on the creation screen M1, a field 106 (a route input portion) for inputting the scheduled traveling route R1 of the agriculture machine. In the field 106, the contour H10 of the agricultural field is displayed. Position information (latitude and longitude) of the field is assigned to the field 106, and the scheduled traveling route R1 is drawn based on a command from the external terminal 15 so that the positional information (latitude and longitude) is assigned to the scheduled traveling route R1. For example, as the scheduled traveling route R1, a straight traveling portion R2 that makes the tractor 1 go straight and a turning portion R3 that makes the tractor 1 turn both are set. The straight traveling portion R2 and the turning portion R3 in the traveling route R1 are associated with the positions (latitude and longitude) of the field 106, and at least the positions corresponding to the straight traveling portion R2 and the turning portion R3 can be set. The creation screen M1 may display a detail setting portion 107 for making detailed settings for the scheduled traveling route R1 such that the width (a working width) of the working device 2, a lapping width in which the working device 2 laps (overlaps) in the width direction in adjacent working areas, a vehicle speed, and the like are set.

Thus, the work creator portion 91 is capable of creating, as the work plan, the agricultural work, the model number, model and name of the agriculture machine (the working device), the work date, the scheduled traveling route R1, the working width, the lapping width, and the like. The work plan (the agricultural field, the agricultural work, the agriculture machine (the working device), the work date, the scheduled traveling route R1, the working width, the lapping width) created by the work creator portion 91 is stored in the work plan storage portion 92.

In creating the work plan, an agricultural map may be displayed on the creation screen M1, and the work plan may be created with reference to the agricultural map displayed on the creation screen M1. The agricultural map is a map obtained by visualizing agricultural map data acquired from various machines.

First, the type, acquisition, and the like of the agricultural map data (the agricultural map) will be described in detail.

The agricultural map data is data in which data relating to agriculture and positions are associated with each other, and includes field shape data, yield data, taste data, growth data, soil data, variable fertilization data, automatic traveling data, work history data, map data, and the like.

The field shape data is data representing a shape of the agricultural field. The yield data is data representing the crop yield, and the taste data is data representing the protein content of the crop. The growth data is data representing the growth of the crop, and is data obtained from vegetation indexes such as DVI, RVI, NDVI, GNDVI, SAVI, TSAVI, CAI, MTCI, REP, PRI, and RSI. The soil data is data representing the components of the soil, the hardness of the soil, and the like. The variable fertilization data is data representing the amount of fertilization when fertilization is performed. The automatic traveling data is data representing the scheduled traveling route R1. The work history data is data representing an actual travel locus when the tractor 1 or the like travels according to the scheduled traveling route R1. The map data is data obtained from the Geospatial Information Authority of Japan or from a map provider that provides maps. These agricultural map data can be obtained by various machines.

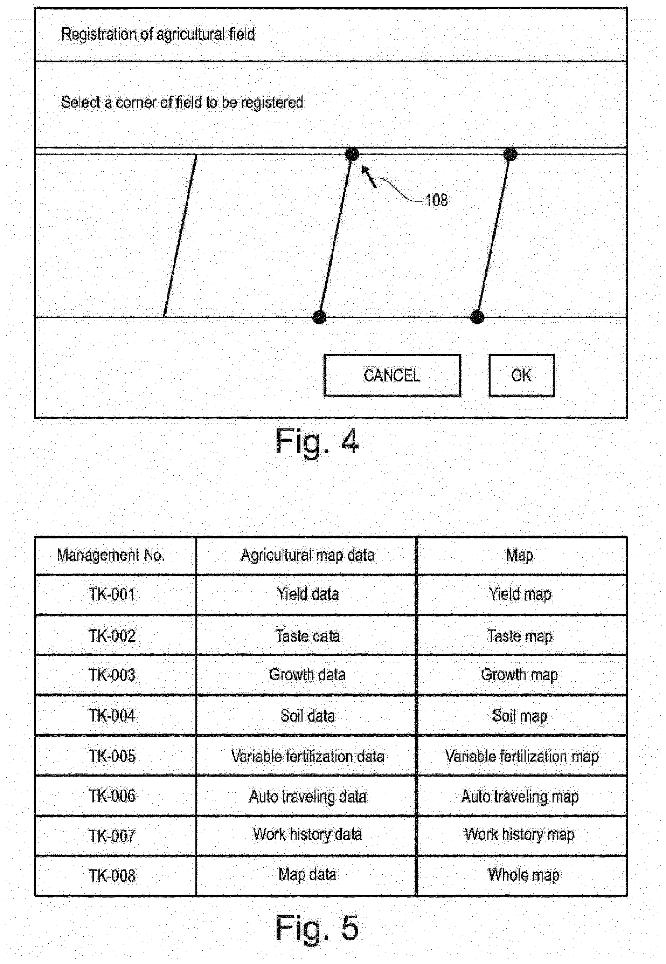

The field shape data can be acquired by the agriculture support device 90 and the external terminal 15. In particular, when an administrator or the like connects the external terminal 15 to the agriculture support device 90, the agriculture support device 90 acquires a map including an agricultural field from a map provider or the like, and causes the external terminal 15 to display the map. As shown in FIG. 4, the administrator or the like specifies, for example, an own agricultural field from the maps displayed on the external terminal 15 with the pointer 108 or the like, and then specifies the outline of the specified agricultural field with the pointer 108. In this manner, the field shape data can be acquired.

The agriculture machine such as a tractor may be manually operated on orbit along the ridge of the agricultural field, and then the position detected by the position detector device 70A during the orbit operation may be used as the field shape data.

The automatic traveling data can be acquired by the agriculture support device 90. In particular, when the work creator portion 91 creates the scheduled travel route R1 as described above, the automatic travel data can be acquired by setting the created scheduled travel route R1 as the automatic travel data. That is, the agriculture support device 90 can acquire the automatic traveling data by incorporating the scheduled traveling route R1 created by the work creator portion 91 as one of the agricultural map data.

The yield data and the taste data can be acquired by the combine 30. As shown in FIG. 1 and FIG. 2, the combine 30 includes a vehicle body 31, a prime mover 32, a grain tank 33, a reaper device 34, a threshing device (not shown in the drawings), and a measuring device 36. The prime mover 32, the grain tank 33 and the threshing device are provided on the vehicle body 31. The reaper device 34 is provided at a front portion of the vehicle body 31. The reaper device 34 is a device configured to reap the cereals. The threshing device is a device configured to thresh the reaped cereals. The grain tank 33 is a tank configured to store the threshed cereals.

The measuring device 36 is a spectroscopic analyser that measures the water content and the protein content of the harvested crops. Thus, the measuring device 36 can detect the crop yield, the moisture rate (the moisture content), and the protein rate (the protein content) of the crop.

The vehicle body 31 is provided with a position detector device 70B. The position detector device 70B is a device configured to detect a position (latitude and longitude), and has the same configuration as the position detector device 70A, and thus the description thereof will be omitted.

The combine 30 includes a storage portion 20B constituted of a non-volatile memory or the like. When the harvesting operation is performed by the combine 30, the storage portion 20B is capable of storing the yield data that associates the crop yield with the position detected by the position detector device 70B, and is capable of storing the protein content and the position detection. Taste data can be stored by associating the protein rate with the position detected by the position detector device 70B.

The growth data can be acquired by the multicopter 50 or the like. As shown in FIG. 1 and FIG. 2, the multicopter 50 includes a body 50a, an arm 50b provided on the body 50a, a rotary wing 50c provided on the arm 50b, and a skid 50d provided on the body 50a. The rotary wing 50c is a device configured to generate a lifting force for flying, and includes a rotor that provides a rotary force and a blade (a propeller) that rotates by the rotary force of the rotor. In addition, the multicopter 50 has an imaging device 50e. The imaging device 50e is constituted of an infrared camera or the like, and is a device capable of shooting crops in an agricultural field.

In addition, the multicopter 50 has a position detector device 70D. The position detector device 70D is a device configured to detect a position (latitude and longitude), and has the same configuration as that of the position detector device 70A, and thus the description thereof will be omitted.

The multicopter 50 flies over the agricultural field, aerially captures the crops on the agricultural field, and then associates the image captured by the imaging device 50e (the captured image) with the position detected by the position detector device 70D to obtain the image data. The image data is stored in the storage portion 20D provided in the multicopter 50. The image data is analysed to be converted into a vegetation index. The storage portion 20D is constituted of a nonvolatile memory or the like.

Thus, by flying the multicopter 50 over the agricultural field, the pre-conversion growth data in which original imaging data that is original data representing growth of crops is related to the position detected by the position detector device 70D can be obtained. The image data of the pre-conversion growth data is converted into the vegetation index with a computer or the like (not shown in the drawings) to create the growth data.

The rice transplanter 40 is capable of acquiring the soil data and the variable fertilization data. As shown in FIG. 1 and FIG. 2, the rice transplanter 40 includes a vehicle body 41, a prime mover 42, a transmission device 43, and a seedling planting device 44. The prime mover 42 and the transmission device 43 are provided on the vehicle body 41. The seedling planting device 44 is provided at a rear portion of the vehicle body 41. The seedling planting device 44 takes out, from the seedling stage 45, the seedlings mounted on the seedling stage 45 provided at the rear portion of the vehicle body 41, and plants them in an agricultural field or the like.

The working device 2 such as a fertilizer configured to perform the variable fertilization or the like can be attached to the rear portion of the vehicle body 41. In addition, the vehicle body 41 is provided with a position detector device 70C. The position detector device 70C is a device configured to detect a position (latitude and longitude), and has the same configuration as that of the position detector device 70A, and thus the description thereof will be omitted.

The rice transplanter 40 includes a storage portion 20C. When the rice transplanter 40 performs the rice transplanting operation, the storage portion 20C associates the fertilization amount performed by the fertilizer with the position detected by the position detector device 70C, and thereby acquires and stores the variable fertilization data.

The rice transplanter 40 includes a hardness detector device 47 configured to detect the hardness of the soil. The hardness detector device 47 detects the hardness of the soil based on the ups and downs (vertical fluctuation) of the vehicle body 41 when the rice transplanter 40 performs the rice transplanting operation. When the rice transplanter 40 performs the rice transplanting operation, the storage portion 20C associates the hardness detected by the hardness detector device 47 with the position detected by the position detector device 70C, and thereby obtains and stores the soil data by.

The work history data can be acquired by the tractor 1. Note that the automatic traveling data and the work history data can be acquired respectively by each of the combine 30 and the rice transplanter 40, when replacing the tractor 1 with the combine 30 and the rice transplanter 40.

The tractor 1 is configured to acquire the scheduled traveling route R1 created by the agriculture support device 90 or the like. When the tractor 1 is in a mode for the automatic traveling, the tractor 1 travels while automatically steering the steering or the like along the scheduled traveling route R1 acquired above. The storage portion 20A stores the position detected by the position detector device 70A when the tractor 1 performs the automatic traveling. That is, the work operation history data can be acquired by storing, to the storage portion 20A, the position of the tractor 1 as the traveling locus when the tractor 1 travels based on the scheduled traveling route R1.

When the tractor 1, the combine 30, the rice transplanter 40, and the multicopter 50 are respectively provided with the communicator devices 60A, 60B, 60C, and 60D, the agricultural map data is transmitted to the agriculture support device 90 with use of the communicator devices 60A, 60B, 60C, and 60D.

The communicator devices 60A, 60B, 60C, and 60D are communication modules configured to perform either the direct communication or the indirect communication with the agriculture support device 90, and configured to perform the wireless communication in accordance with the Wi-Fi (Wireless Fidelity, a registered trademark) of the IEEE 802.11 series which is a communication standard, the BLE (Bluetooth (a registered trademark) Low Energy), the LPWA (Low Power, Wide Area), the LPWAN (Low-Power Wide-Area Network), or the like, for example. In addition, the communicator devices 60A, 60B, 60C, and 60D is capable of performing the wireless communication through a mobile phone communication network or a data communication network, for example.

In the direct communication, the agriculture support device 90 requests the communicator devices 60A, 60B, 60C, and 60D to transmit agricultural map data regularly or irregularly. When the communicator devices 60A, 60B, 60C, and 60D receive the request for transmission of the agricultural map data, the tractor 1, the combine 30, the rice transplanter 40, and the multicopter 50 transmit the agricultural map data stored in the storage portions 20A, 20B, 20C, and 20D to the agriculture support device 90 through the communicator devices 60A, 60B, 60C, and 60D, in response to the request. Alternatively, in the direct communication, the agricultural map data of the storage portions 20A, 20B, 20C, and 20D are transmitted, to the agriculture support device 90, from the communicator devices 60A, 60B, 60C, and 60D provided in the tractor 1, the combiner 30, the rice transplanter 40, and the multicopter 50.

In the direct communication, when the agriculture support device 90 receives the image data that is the source of the growth data, the agriculture support device 90 may convert the image data into the growth data.

In the indirect communication, the communicator devices 60A, 60B, 60C, and 60D periodically or irregularly transmit, to the terminal 15B, the agricultural map data stored in the storage portions 20A, 20B, 20C, and 20D. Upon receiving the agricultural map data, the terminal 15B stores (saves) the agricultural map data that is temporarily received. The agriculture support device 90 requests the terminal 15B to transmit the agricultural map data regularly or irregularly. When the terminal 15B receives the request for transmission of the agricultural map data, the terminal 15B transmits the agricultural map data, which is temporarily stored, to the agriculture support device 90. Alternatively, in the indirect communication, the agricultural map data is transmitted from the terminal 15B to the agriculture support device 90. In the indirect communication, when the terminal 15B receives the image data that is the source of the growth data, the terminal 15B may convert the image data into the growth data. Alternatively, similarly to the direct communication, the agriculture support device 90 may convert the image data into the growth data after the agriculture support device 90 receives the image data.

Each of the tractor 1, the combine 30, the rice transplanter 40, and the multicopter 50 is provided with an input/output device 63 to which a storage medium such as a USB memory or an SD card, which is an electronic storage medium, can be connected when the communicator devices 60A, 60B, 60C, and 60D are not provided in the tractor 1, the combine 30, the rice transplanter 40, and the multicopter 50. The input/output device 63 is provided in the controller devices, the display devices, and the like of the tractor 1, the combine 30, the rice transplanter 40, the multicopter 50, and is capable of writing data to a storage medium and acquiring information of the storage medium. When the input/output device 63 is connected to the storage medium, the agricultural map data stored in the storage portions 20A, 20B, 20C, and 20D is transferred to the storage medium. The storage medium is capable of being connected to the terminals 15A and 15B. When the storage medium is connected to the terminals 15A and 15B, the agricultural map data stored in the storage medium is transferred to the terminals 15A and 15B. The terminal 15A and the terminal 15B transmit the agricultural map data to the agriculture support device 90. In the case where the storage medium is used, the terminals 15A and 15B may convert the image data into growth data when the terminals 15A and 15B receive the image data. Alternatively, similarly to the direct communication, the agriculture support device 90 may convert the image data into growth data after the agriculture support device 90 receives the image data.

As shown in FIG. 1, the agriculture support device 90 has a map data storage portion 93. The map data storage portion 93 is constituted of a nonvolatile memory or the like, and stores the acquired agricultural map data (the field shape data, the yield data, the taste data, the growth data, the soil data, the variable fertilization data, the automatic traveling data, the work history data, the map data). Specifically, as shown in FIG. 5, when the agriculture support device 90 acquires the agricultural map data, the map data storage portion 93 allocates the management information indicated by characters, alphanumeric characters, and the like in the agricultural map data acquired above, and the agricultural map data is stored together with the management information. The management information is information set to make it easy to calculate, search, organize, and the like of the agricultural map data.

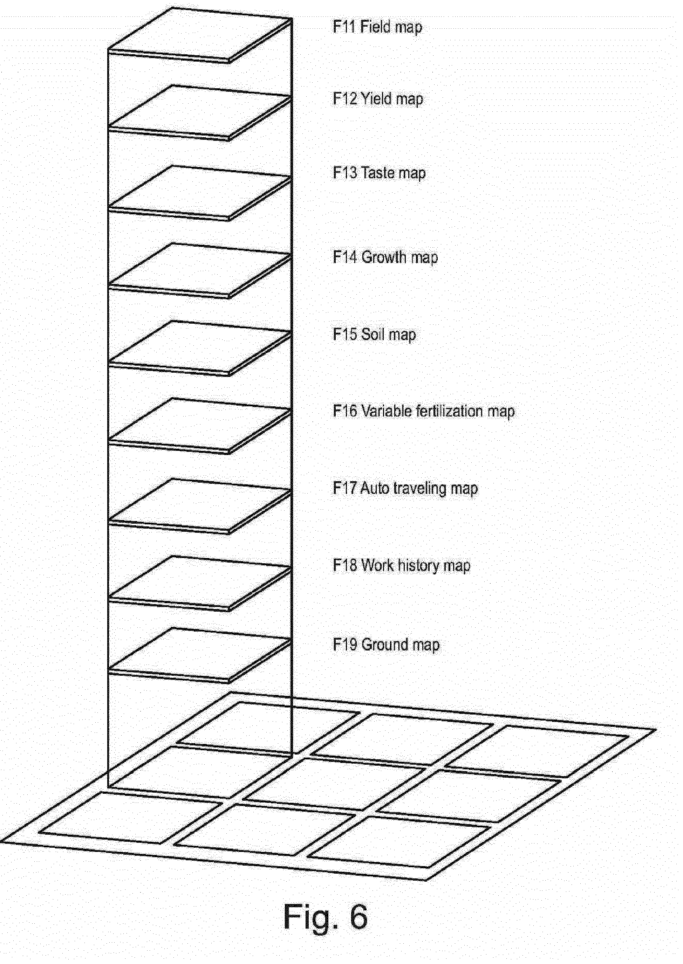

The agriculture support device 90 includes a display controller portion 97. The display controller portion 97 is constituted of electrical and electronic components provided in the agriculture support device 90, computer programs stored in the agriculture support device 90, or the like. The display controller portion 97 causes the external terminal 15 to display an agricultural map that is obtained by visualizing the agricultural map data stored in the map data storage portion 93. As shown in FIG. 6, the agricultural map includes a field map F11 obtained by visualizing the field shape data, a yield map F12 obtained by the visualizing yield data, a taste map F13 obtained by visualizing the taste data, a growth map F14 obtained by visualizing the growth data, a soil map F15 obtained by visualizing the soil data, a variable fertilization map F16 obtained by visualizing the variable fertilization data, an automatic travel map F17 obtained by visualizing the automatic travel data, a work history map F18 obtained by visualizing the work history data, and a ground map F19 obtained by visualizing the map data.

As illustrated in FIG. 3, the work creator portion 91 displays the map display portion 109 on the creation screen M1 in cooperation with the display controller portion 97. That is, in displaying the creation screen M1 on the external terminal 15, the work creator portion 91 notifies the display controller portion 97 of displaying the map display portion 109 on the creation screen M1, and the display controller portion 97 displays an agricultural map on the map display portion 109 in response to the notification.

More specifically, the display controller portion 97 first refers to the map data storage portion 93, the agricultural map data that needs to be converted into a map is converted into the agricultural map among the agricultural map data stored in the map data storage portion 93, and then the agricultural map converted above is displayed in the map display portion 109. For example, the display controller portion 97 converts, into the agricultural map, the agricultural map data such as the yield data, the taste data, the growth data, the soil data, and the variable fertilization data.

In converting the agricultural map data into the agricultural map, the display controller portion 97 refers to the data such as numerical values and the position (latitude and longitude) in the agricultural map data (the yield data, the taste data, the growth data, the soil data, the variable fertilization data). As illustrated in FIG. 3, the display controller portion 97 divides the field in the map display portion 109 into a plurality of areas Qn (n = 1, 2, 3, ..., N), and defines a representative value Dn (n = 1, 2, 3,... N) in each of the divided areas Qn (n = 1, 2, 3, ..., N), the representative value Dn being an average value obtained by averaging a plurality pieces of data Dn [i] (n: area, Dn [i]: data, i: number of data) included in each of the divided areas Qn in the agricultural map data. Alternatively, the display controller portion 97 defines a representative value Dn that is an integrated value obtained by integrating a plurality of data Dn [i] included in each of the divided areas Qn in the agricultural map data. Alternatively, the display controller portion 97 defines a representative value Dn that is a numerical value per area obtained by dividing the average value and the integrated value by the area of the area Qn.

After obtaining the representative value Dn, the display controller portion 97 assigns one of a plurality of groups (a plurality of ranks) according to the magnitude (the value) of the representative value Dn, and changes the colour or the like for each of the ranks, thereby displaying the agricultural map. That is, the map display portion 109 divides a field indicating an agricultural field or the like into a plurality of areas, and thereby displays a mesh-type agricultural map in which data of agricultural map data is assigned to the area Qn. In addition, in the embodiment mentioned above, the configuration in which the agricultural map is visualized by the mesh type map is exemplified. However, the visualized map of the agricultural map is not limited to the example described above.

When a plurality pieces of agricultural map data are stored in the map data storage portion 93, the map display portion 109 displays the plurality of agricultural maps arranged vertically or horizontally. When displaying the agricultural map on the map display portion 109, the display controller portion 97 preferably displays, around the agricultural map, basic map information such as the name of the agricultural map and the acquisition date of the agricultural map data.

The basic information (name, acquisition date, and the like) of the agricultural map is related to each of the agricultural map data (the management information) by connecting one of the terminal 15A and the terminal 15B to the agriculture support device 90 and by inputting the basic information. Note that the basic information may be automatically generated and associated with the management information, and may be stored in the map data storage portion 93. Thus, the inputting method and the relating method are not limited thereto.

Thus, since various types of agricultural maps (F11 to F19) are displayed on the map display portion 109 of the creation screen M1, the administrator and the like is capable of setting the items of agricultural work, the work date, the scheduled traveling route R1 and the like while watching the agricultural map on the map display portion 109.

Although a plurality of agricultural maps (F11 to F19) are displayed on the map display portion 109, a predetermined agricultural map related to a work plan set on the creation screen M1 among the plurality of agricultural maps may be displayed on the map display portion 109. The display controller portion 97 determines an agricultural map to be displayed on the map display portion 109 in accordance with the items of the agricultural work inputted to the work inputting portion 101 among a plurality of agricultural maps, for example. When the agricultural work is the fertilization, the display controller portion 97 causes the map display portion 109 to display an agricultural map (the variable fertilization map F16) related to the fertilization.

Thus, since the display controller portion 97 causes the external terminal 15 to display a predetermined agricultural map related to the creation of the work plan among the plurality of agricultural maps, the administrator or the like is capable of creating a plan while watching the items of agricultural work set on the creation screen M1 or the agricultural map according to the scheduled traveling route R1.

As shown in FIG. 1, the agriculture support device 90 has a communicator portion 95. The communicator portion 95 is constituted of electric and electronic components provided in the agriculture support device 90, computer programs stored in the agriculture support device 90, or the like. The communicator portion 95 transmits the work plan created by the work creator portion 91 to an agriculture machine such as the tractor 1.

The communicator portion 95 transmits, to the tractor 1, the work plan created on the creation screen M1, that is, the work plan stored in the work plan storage portion 92. More specifically, when the communicator device 60A of the tractor 1 requests the transmission of a work plan, or when the terminal 15B capable of communicating with the tractor 1 requests the transmission of a work plan, the work plan (the agricultural field, the agricultural work, the model number, model and name of the agriculture machine (working device), work date, the scheduled traveling route R1, the working width, and the lapping width) are transmitted to the communicator device 60A or the terminal 15B that has requested. When the work plan is transmitted to the terminal 15B, the terminal 15B transfers the work plan to the input/output device 63 of the tractor 1 through the electronic storage medium.

The display device 80 includes a plan acquiring portion 81 and a display portion 82. The plan acquiring portion 81 is constituted of electric and electronic components provided on the display device 80, computer programs stored in the display device 80, and the like. The plan acquiring portion 81 acquires the work plan transmitted from the communicator portion 95 of the agriculture support device 90. For example, the plan acquiring portion 81 instructs the communicator device 60A of the tractor 1 to request the agriculture support device 90 to acquire a work plan, and receives the work plan when the communicator device 60A receives the work plan. Alternatively, when the work plan is inputted to the input/output device 63 through the terminal 15B, the plan acquiring portion 81 fetches the work plan inputted to the input/output device 63. The display portion 82 is constituted of a liquid crystal panel, a monitor, or the like.

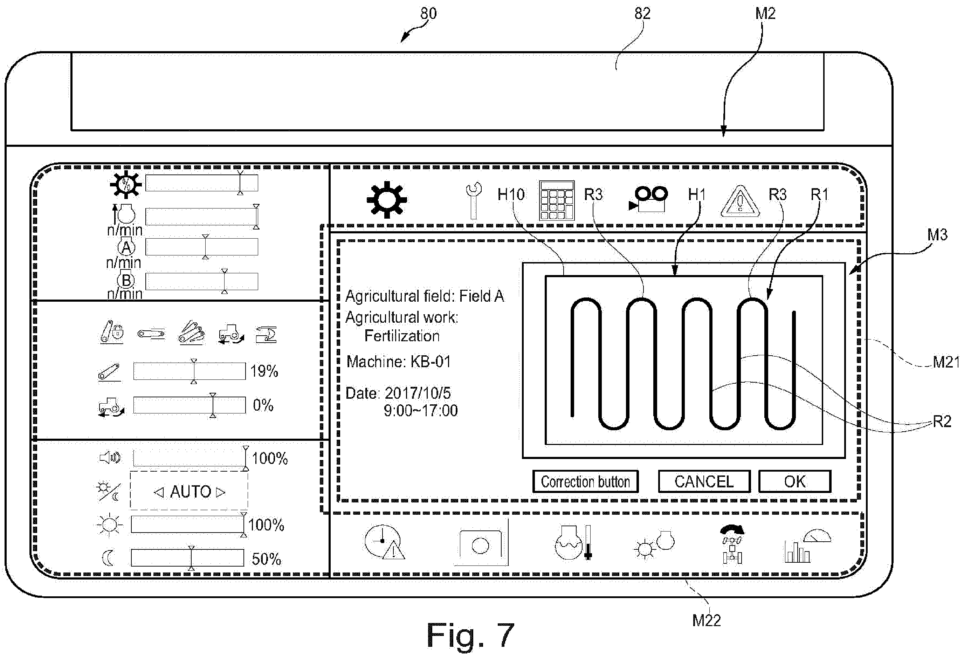

As shown in FIG. 7, when a predetermined operation is performed, the display device 80 displays a screen M2 on the display portion 82. The screen M2 is divided at least into a first area M21 and a second area M22. The first area M21 is an area for displaying at least outside information (external information) acquired by the tractor 1. The second area M22 is an area for displaying at least inside information (internal information) of the tractor 1.

When acquiring the work plan, the display device 80 displays a list of work plans that are the external information, and when a predetermined work plan is selected, the display device 80 displays a work plan screen M3 indicating the selected work plan in the first area M21.

In displaying the work plan screen M3 in the first area M21, the work plan screen M3 displays the agricultural work, a model number, model and name of agriculture machine (working device), a work date, the scheduled traveling route R1, the working width, and the lapping width.

The display device 80 evaluates the execution of the work plan based on the work plan acquired by the tractor 1. As shown in FIG. 1, the display device 80 includes a machine information acquiring portion 83 and an evaluator portion 84. The mechanical information acquiring portion 83 and the evaluator portion 84 are constituted of electric and electronic components provided on the display device 80, computer programs stored in the display device 80, and the like.

The machine information acquiring portion 83 requests the machine information of the agriculture machine to the working device 2, that is, requests the machine information of the working device 2 when the working device 2 is coupled to the coupler portion 8, when the ignition switch of the tractor 1 is turned on to activate the display device 80, and the like. In response to the request from the machine information acquiring portion 83, the working device 2 transmits a model number, a model, a name, and the like stored in advance in the working device 2 to the machine information acquiring portion 83 as the machine information. The machine information acquiring portion 83 holds the machine information transmitted from the working device 2. Note that the machine information acquiring portion 83 may periodically request the working device 2 for the machine information even after acquiring the machine information, and may acquire the machine information from the working device 2. Alternatively, the machine information may be periodically transmitted from the working device 2 to the display device 80, and the machine information acquiring portion 83 may acquire the machine information when the machine information is inputted to the display device 80.

In this manner, the model number, model, name, and the like of the working device 2 mounted on the tractor 1 can be acquired before starting the work or the like.

After the plan acquiring portion 81 acquires the work plan, when the machine information acquiring portion 83 acquires the machine information (the model number, the model, the name, and the like), the evaluator portion 83 compares the machine information to the work plan (the model number, the model, the name, and the like) acquired by the plan acquiring portion 81, and thereby evaluates the execution of the work plan. For example, the evaluator portion 84 compares the model number obtained from the working device 2 to the model number indicated in the work plan, and determines that the work plan can be executed when the model numbers match each other. On the other hand, the evaluator portion 84 compares the model number obtained from the working device 2 to the model number indicated in the work plan, and determines that the work plan cannot be executed when the model numbers do not match each other.

The evaluator portion 84 requests the machine information acquiring portion 83 to acquire the machine information when the machine information acquiring portion 83 has not acquired the machine information after the plan acquiring portion 81 acquires the work plan, and the evaluator portion 84performs the evaluation when the machine information acquiring portion 83 has acquired the machine information. When the machine information acquiring portion 83 cannot acquire the machine information even if the evaluator portion 84 requests the machine information acquiring portion 83 to acquire the machine information, the evaluator portion 84 notifies the display portion 82 that the attachment confirmation of the working machine 2 is displayed, and the display portion 82 displays that the attachment of the work apparatus 2 is confirmed.

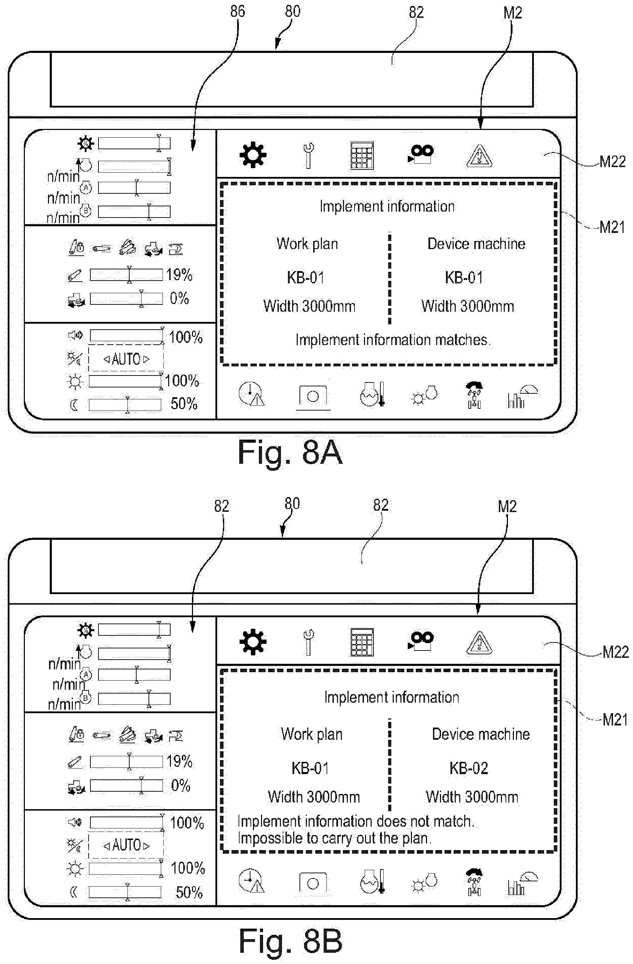

The display portion 82 displays the machine information and displays, as the evaluation result of the evaluator portion 84, whether or not the work plan can be executed. For example, as shown in FIG. 8A, the display portion 82 displays at least the model number obtained from the working device 2 and the model number indicated in the work plan, and when the model numbers match each other, the display portion 82 displays information representing that the machine information (the implement information) shown in the work plan matches each other and thus the work plan can be executed. As shown in FIG. 8B, when the model numbers do not match each other, the display portion 82 displays the model number obtained from the working device 2 and the model number shown in the work plan, and displays information indicating that the machine information (the implement information) shown in the work plan does not match each other and thus the work plan cannot be executed. In addition, when the model numbers do not match each other, the display portion 82 displays a message to prompt the user to change the working device 2.

In the case where the relation between the model number, the model, and the name and the detailed information such as the working width of the working device 2 is registered in the display device 80, the display portion 82 may display the detailed information such as the working width corresponding to the machine information as shown in FIG. 8A and FIG. 8B.

When the evaluator portion 84 determines that the work plan cannot be executed, the display device 80 disables at least an input for shifting to execution of the work plan. For example, the reception of the input to the setting unit 86 displayed in the second area M22, that is, the reception of the input to the setting unit 86 for changing the setting of the tractor 1 or the working device 2 is stopped. In other words, the input to the user interface for changing the setting of the tractor 1 or the working device 2 is stopped.

In the above-described embodiment, the evaluation is performed based on whether or not the implement information matches the work plan. However, the evaluator portion 84 may judge whether or not the work can be executed in the agricultural field specified in the work plan, based on an area of the agricultural field (an agricultural field area) and on the remaining amount of fuel mounted on the tractor 1 or the like, which is machine information. The above-described example is merely an example, and the evaluator portion 84 may perform the evaluation by comparing various types of machine information with a work plan.

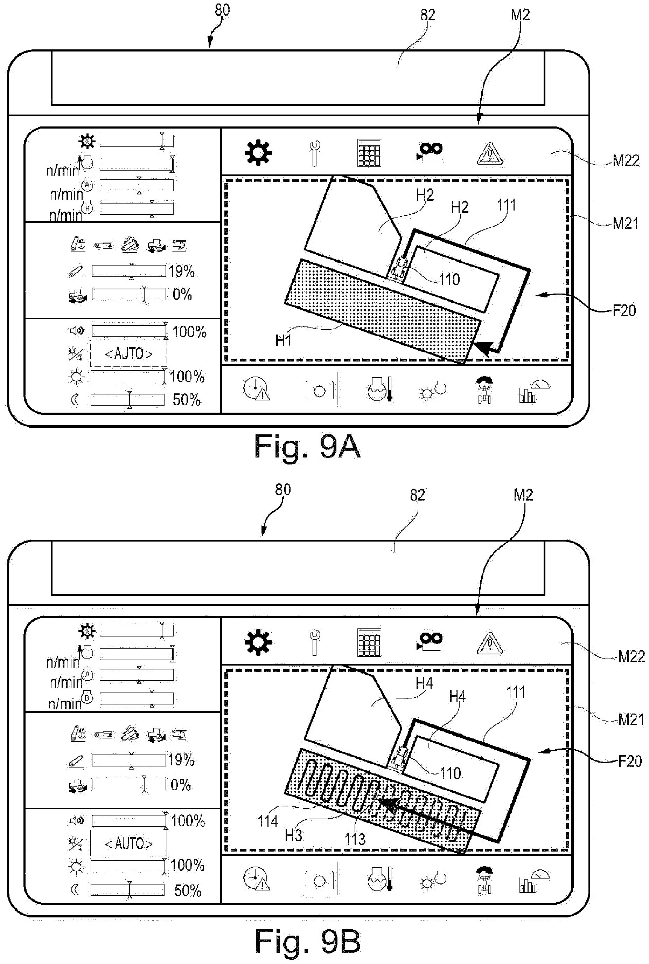

Now, as shown in FIG. 9A, the display portion 82 of the display device 80 displays, in the first area M21, a work map F20 including the agricultural field represented in the work plan. The work map F20 is a map registered in the display device 80 in advance. Note that map data including an agricultural field may be acquired with the agriculture support device 90 or the like, and the map data acquired above may be used as the work map F20.

More specifically, the display portion 82 extracts a work plan to be performed on the day (referred to as a current day plan) from among a plurality of work plans, using the work date as a key, and the display portion 82 displays, on the work map F20, an agricultural field (referred to as a work target field) H1 indicated by the current day plan extracted above. In addition, the display portion 82 respectively displays the target work field H1 and the other fields H2 other than the target work field H1 in different colours from among the plurality of work plans on the work map F20. The display portion 80 may display both the graphic 110 indicating the current position of the tractor 1 and the target work field H1 on the work map F20, and may display the guidance route 111 from the current position to the entrance of the target work field H1.

In addition, as shown in FIG. 9B, the display portion 82 of the display device 80 displays a position (interruption position) 113 where the agricultural work is interrupted when the agricultural work is performed by the tractor in accordance with the work plan. In particular, the display portion 82 of the display device 80 displays the traveling locus 114 on the work map F20 based on the position detected by the position detector device 70A (on a detected position). For example, when the operation interruption is instructed by an input to the display device 80, the detected position at the time when the interruption is instructed is held as the interruption position 113. In addition, in the agricultural work in which the work was interrupted, the work name or the like indicating the agricultural work is also held as the interruption position. Here, when the tractor 1 moves to another place after the interruption of the operation and resumes the operation, the field H3 where the operation was interrupted (a target interruption field) and the other fields H4 other than the target interruption field H3 are respectively displayed in different colours. The display portion 80 may display both the graphic 110 indicating the current position and the target interruption field H3 on the work map F20, and may display the guidance route 111 from the current position to the interruption position 113 in the target interruption field H3.

Thus, by receiving the work plan transmitted from the agriculture support device 90 on the tractor 1 side and by displaying the work plan received above on the display device 80, it is possible to perform agricultural work by the tractor 1 corresponding to the work plan.

Now, on the tractor 1 side, it is possible to judge whether the agricultural work indicated in the work plan has been performed in accordance with the instruction. The display device 80 has a work judgment portion 87. The work judgment portion 87 is constituted of electric/electronic parts provided in the display device 80, computer programs stored in the display device 80, or the like.

When the evaluator portion 84 determines that the work plan can be executed, the work judgment portion 87 judges during the work by the tractor 1 whether the agricultural work indicated in the work plan has been completed by the tractor 1. For example, the work judgment portion 87 judges whether or not the agricultural work indicated in the work plan has been completed by the tractor 1 based on the traveling locus 114 in the field represented in the work plan, that is, in the target work field H1.

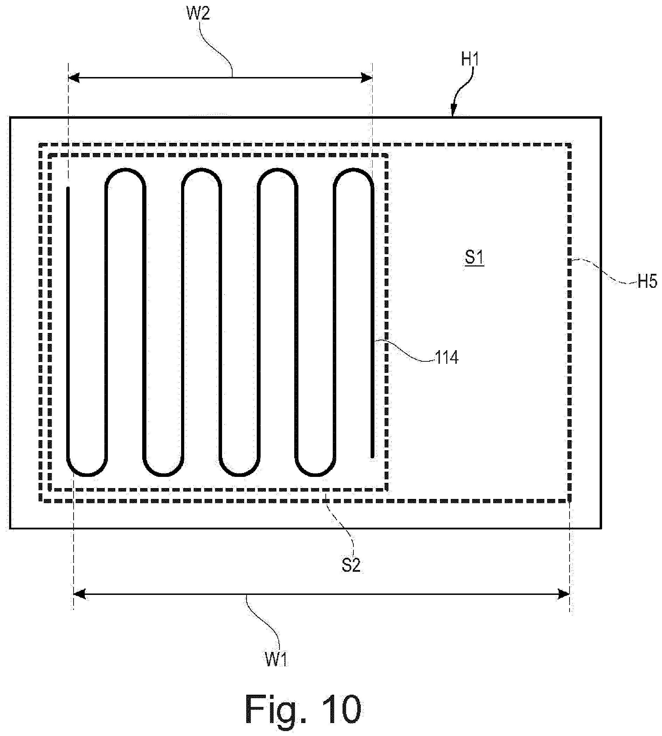

As shown in FIG. 10, when a notification of the end of the work is given by performing a predetermined operation on the display device 80, the work judgment portion 87 compares, in the target work field H1, a width W1of an area (a work area) where the work can be performed to the execution width W2 obtained by adding the work width of the working device 2 and the like to the outermost line (excluding the turning portion) in the traveling locus 114.

Alternatively, the work judgment portion 87 compares the area S1 of the work area H5 with the execution area S2 obtained from the traveling locus 114 and the work width. The work area H5 is an area where work can be substantially performed by the tractor 1 or the like. For example, the work area H5 is an area set based on a position detected by a detection position 70 that detects an area in which the tractor 1 can travel in the target work field H1, the area being obtained by the tractor 1 that has travelled around the target work field H1 before setting the scheduled traveling route R1 or in registering a work map to the display device 80. In addition, a portion preliminarily excluding a region shifted inward by a predetermined distance from the contour of the ridge of the target work field H1 or the like may be set as the work region H5.

When the width W1 of the work area H5 is larger than the execution width W2, when the area S1 is larger than the execution area S2, and the like, the work judgment portion 87 determines that the tractor 1 has not completed the agricultural work indicated in the work plan. That is, the work judgment portion 87 determines that the agricultural work indicated in the work plan is not completed by the tractor 1 when the area where the work is performed by the tractor 1 is smaller than the area where the agricultural work must be actually performed, thereby remaining unfinished work. In the embodiment mentioned above, the comparison between the width W1 and the execution width W2 of the work area H5 and the comparison between the area S1 and the execution area S2 are performed, and the work area H5 is sometimes a little larger due to a setting error and the like. Thus, the work judgment portion 87 may determine that the work plan has been executed even when the execution width W2 is smaller than the width W1 or the area S1 by an error range (a few percent).

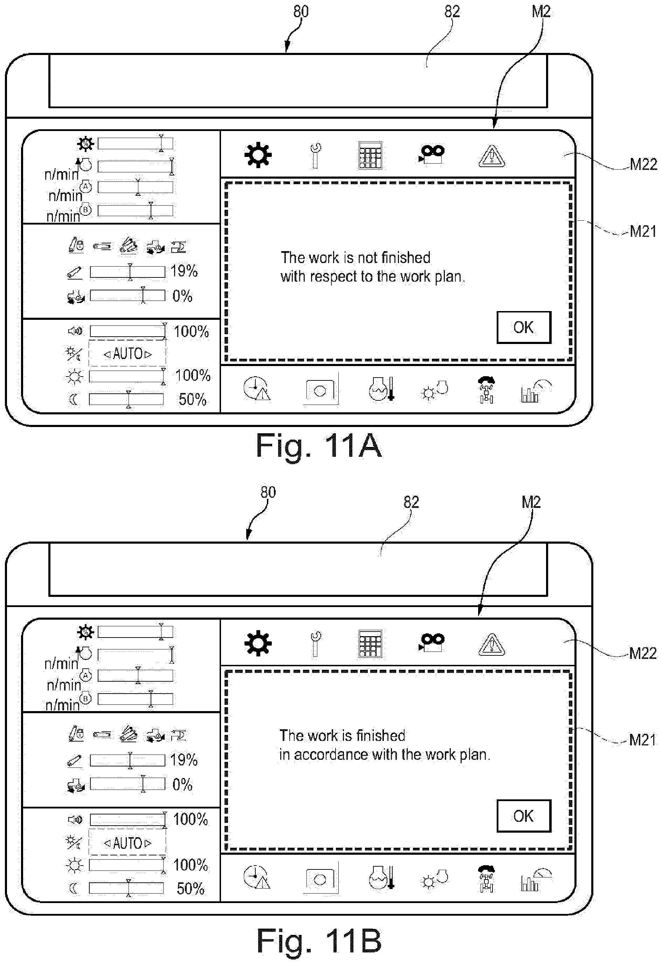

When the work judgment portion 87 determines that the agricultural work has not been completed by the tractor 1, the display portion 82 of the display device 80 displays that the work has not been completed in accordance with the work plan, as shown in FIG. 11A. On the other hand, when the work judgment portion 87 determines that the tractor 1 has completed the agricultural work, the display portion 82 of the display device 80 displays that the work has been completed in accordance with the work plan, as shown in FIG. 11B.

When the completion of work is notified, the display device 80 notifies any one of the controller device 12 and the communicator device 60A of the completion of work. In the direct communication, when the completion of work is notified, the communicator device 60A transmits, to the agriculture support device 90, any one of the work result (a first work result) stored in the controller device 12, the work result (a second work result) stored in the communicator device 60A, and the work result (a third work result) stored in the display device 80. In the indirect communication, the communicator device 60A transmits, to the terminal 15B, any one of the first work record, the second work record, and the third work record. After receiving the work record, the terminal 15B transmits the work record received above to the agriculture support device 90.

When the display device 80 notifies the completion of work and when the work judgment portion 87 determines that the agricultural work is completed, the communicator device 60A may transmit the work result to any one of the agriculture support device 90 and the terminal 15B.

Upon reception of the work result, the agriculture support device 90 stores the work result received above in the result storage portion 99 constituted of a nonvolatile memory or the like.

In this manner, after displaying the work plan on the display device 80, the work result obtained when the operator or the like has executed the agricultural work with the agriculture machine such as the tractor 1 can be transmitted to the agriculture support device 90 and stored. In particular, the work result based on the work plan is transmitted to the agriculture support device 90 after the work plan is displayed on the display device 80, so that the transmission certifies that the tractor 1 confirms the correspondence between the work plan and the work result. In addition, the reliability of data of the work result data for a work plan can be improved.

The agriculture support system includes the agriculture support device 90 having the work creator portion 91 and the communicator portion 95, and the display device having the machine information acquiring portion 83, the plan acquiring portion 81, the evaluator portion 84, and the display portion 82 and being provided to the agriculture machine.

According to that configuration, the work plan created by the work creator portion 91 of the agriculture support device 90 can be acquired by the display device 80 side provided in the agriculture machine, and the evaluation of execution of work plan can be performed based on the work plan acquired above and the machine information of the agriculture machine. In addition, since the evaluation result can be displayed on the display device 80, the operator who boards on the agriculture machine can confirm the evaluation. That is, an operator or the like can easily confirm items related to the execution of the agricultural work on the agriculture machine side.

The evaluator portion 84 evaluates whether the work plan can be executed based on the machine information of the working device 2 provided in the agriculture machine, and the display portion 82 displays whether or not the work plan can be executed as the evaluation result together with the machine information.

According to that configuration, the operator who boards on the agriculture machine can easily confirm whether or not the work plan can be executed by the operation of the working device 2 provided to the agriculture machine 2.

The display portion 82 displays the evaluation result in an area of the display device 80 where the external information is allowed to be displayed. According to that configuration, since the evaluation result is displayed in the area of the display device 80 where the external information is displayed, the operator can easily find that the evaluation result is displayed in the area, and thus the operator can be easily aware of the evaluation result.

The display portion 82 displays the position where the agricultural work was interrupted during the agricultural work being performed by the agriculture machine in accordance with the work plan. According to that configuration, the position at which the agricultural work was interrupted is easily found, and even when the agriculture machine is located at a position different from the interruption position, the operator can easily move the agriculture machine to the interruption position.

The display device 80 has the work judgment portion 87 configured to judge whether or not the agricultural work represented in the work plan has been completed by the agriculture machine during the work of the agriculture machine when the evaluator portion 84 determines that the work plan can be executed, and the display portion 82 displays a judgment result by the work judgment portion 87.

According to that configuration, when the work plan can be performed by the agriculture machine, it can be easily known whether or not the work for the work plan is being executed reliably (whether or not the work has been completed).

The work judgment portion 87 judges whether or not the agricultural work represented in the work plan has been completed by the agriculture machine based on at least the travel locus of the agriculture machine that has travelled on the agricultural field represented in the work plan. According to that configuration, it is possible to easily judge, based on the traveling locus, whether the agricultural work has been performed in accordance with the work plan based on the traveling locus.

In the embodiment mentioned above, the display controller portion 97 displays the agricultural map on the external terminal 15 in creating the work plan. However, the agricultural map may be displayed on the display device 80.

As shown in FIG. 1, the agriculture support device 90 has the data transmitter portion 98. The data transmitter portion 98 is constituted of electric/electronic components provided in the agriculture support device 90, computer programs stored in the agriculture support device 90, or the like. The data transmitter portion 98 transmits plural pieces of agricultural map data stored in the map data storage portion 93 to the outside. For example, in the case where the direct communication can be performed, the display device 80 requests the communicator device 60A to transmit the agricultural map data when a predetermined operation is performed on the display device 80. The communicator device 60A requests the agriculture support device 90 to transmit the agricultural map data in response to the request for transmitting the agricultural map data transmitted from the display device 80. The data transmitter portion 98 transmits a plurality of pieces of agricultural map data stored in the map data storage portion 93 to the communicator device 60A in response to the request from the communicator device 60A. When the communicator device 60A receives the plural pieces of agricultural map data, the display device 80 stores the plural pieces of agricultural map data in the storage portion (the data storage portion) 88 constituted of a nonvolatile memory or the like.

When a predetermined operation is performed on the display device 80 in the case where the indirect communication can be performed, the display device 80 requests the terminal 15B to transmit the agricultural map data. The terminal 15B requests the agriculture support device 90 to transmit the agricultural map data in response to the request for transmission of the agricultural map data from the display device 80. The data transmitter portion 98 transmits plural pieces of agricultural map data stored in the map data storage portion 93 to the terminal 15B in response to the request from the terminal 15B. When the terminal 15B receives the plural pieces of agricultural map data, the display device 80 acquires plural pieces of agricultural map data through the communicator device 60A, and stores, in the data storage portion 88, the plural pieces of agricultural map data acquired above.

In the case when the tractor 1 is not provided with the communicator device 60A or the like, the terminal 15A or the terminal 15B is operated to request the agriculture support device 90 to transmit the agricultural map data. The data transmitter portion 98 transmits plural pieces of agricultural map data to the terminal 15A or the terminal 15B in response to the request from the terminal 15A or the terminal 15B. When a storage medium is connected to the terminal 15A or the terminal 15B, the plural pieces of agricultural map data acquired by the terminal 15A or the terminal 15B is transferred to the storage medium. When the input/output device 63 is connected to the storage medium, the plural pieces of agricultural map data are transferred to the input/output device 63. When the input/output device 63 acquires the plural pieces of agricultural map data, the display device 80 stores the agricultural map data acquired above in the data storage portion 88.

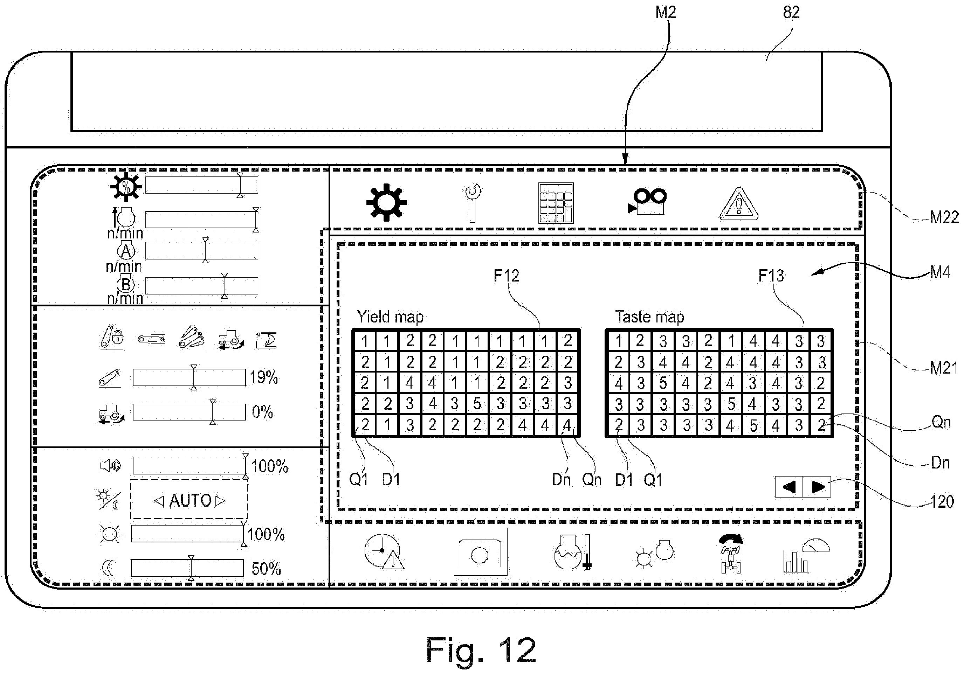

When a predetermined operation is performed on the display device 80, the display device 80 displays a layer map screen M4 in the first area M21 of the display screen M2 as shown in FIG. 12.

The layer map screen M4 is configured to display an agricultural field map F11, a harvest map F12, a taste map F13, a growth map F14, a soil map F15, a variable fertilization map F16, an automatic traveling map F17, a work history map F18, and a ground map F19. That is, on the layer map screen M4, a plurality of agricultural maps can be displayed, similarly to the external terminal 15.

For example, the display device 80 refers to the data storage portion 88, converts, into an agricultural map, the agricultural map data which needs to be converted into a map from among the agricultural map data stored in the data storage portion 88, and displays the agricultural map converted above on the layer map screen M4. For example, the display device 80 converts, into the agricultural map, the agricultural map data, that is, the yield data, the taste data, the growth data, the soil data, and the variable fertilization data.

For example, the display device 80 refers to data such as numerical values and positions (latitude and longitude) in the agricultural map data (the yield data, the taste data, the growth data, the soil data, the variable fertilization data). On the other hand, the display device 80 divides the field on the layer map screen M4 into a plurality of areas Qn (n = 1, 2, 3, ... , N), and sets, as the representative value Dn (n = 1, 2, 3, ... , N), the average value of the data Qn [i] (n: section, Qn [i]: data, i: number of pieces of data) to enter each of the areas Qn divided in the agricultural map data. Alternatively, the display device 80 sets, as the representative value Dn, an integrated value of the plural pieces of data Qn [i] to enter each of the areas Qn divided in the agricultural map data. Alternatively, the display device 80 sets, as the representative value Dn, a value per area obtained by dividing the average value or the integrated value with the area of the area Qn.

After obtaining the representative value Dn, the display device 80 allocates the representative value Dn to one of a plurality of groups (a plurality of ranks) depending on the magnitude (the value) of the representative value Dn, and changes the colour or the like depending on the ranks, thereby displaying the agricultural map. That is, the layer map screen M4 displays a mesh-type agricultural map in which the field representing an agricultural field or the like into a plurality of areas and the data of the agricultural map data is assigned to the area Qn. The embodiment mentioned above describes the example in which the agricultural map is visualized in a map format of the mesh type. However, the visualized map of the agricultural map is not limited to the above-described example.

As shown in FIG. 12, a switch portion 120 is displayed on the layer map screen M4. When the switch portion 120 is selected, the agricultural map displayed on the layer map screen M4 is changed. For example, when the switch portion 120 is selected under the state where the yield map F12 and the taste map F13 are displayed on the layer map screen M4, the display is changed from the yield map F12 and the taste map F13 to the growth map F14 and the soil map F15. Thus, the map F14 and the soil map F15 are displayed on the layer map screen M4. That is, every time when the switch portion 120 is selected, the agricultural map is switched to be displayed.

In addition, the display device 80 may display the agricultural map corresponding to the work plan on the layer map screen M4. When displaying the agricultural map on the layer map screen M4, the display device 80 extracts the current day plan from the plurality of work plans, for example. In the case where the agricultural work represented in the current day plan is the fertilization, the display device 80 displays, on the layer map screen M4, the agricultural map (variable fertilization map F16) on fertilization. In the case where there is a plurality of the current day plans, the agricultural maps corresponding to the current day plans can be displayed sequentially by selecting the switch portion 120.

The agricultural support system includes the agriculture support device 90 that has the map data storage portion 93 configured to store the agricultural map data, and the display device 80 configured to acquire the agricultural map data. The display device 80 includes the display portion 82 configured to display a plurality of the agricultural maps in which the plural pieces of agricultural map data acquired above are visualized. The agriculture support device 90 includes the display controller portion 97 configured to display, on the external terminal 15 different from the display device 80, the plurality of agricultural maps in which the plural pieces of agricultural map data stored in the map data storage portion 93 are visualized.

According to that configuration, not only the external terminal 15 in capable of displaying the agricultural map visualizing the agricultural map data, but also the display device 80 is also capable of displaying the agricultural map. As the result, the operator can confirm a plurality of agricultural maps on the external terminal 15 while confirming a plurality of agricultural maps on the display device 80. That is, since the agricultural map can be confirmed at various places, the operator can perform the agricultural work according to a condition.

The agriculture support device 90 includes the work creator portion 91 configured to create a work plan for agricultural work for the external terminal 15, and the display portion 82 displays a plurality of agricultural maps that visualize the work plan created by the work creator portion 91 and the plural pieces of agricultural map data transmitted from the data transmitter portion.

According to that configuration, the operator is allowed to watch both of the work plan and the plurality of agricultural maps and the operator is allowed to perform the agricultural work while watching the relation between the work plan and the plurality of agricultural maps.

The display portion 82 displays, as the agricultural map, data of areas shared with each of the plurality of agricultural maps.

According to that configuration, it is possible to compare each other data of areas shared with the plurality of agricultural maps. For example, it is possible to compare each other data of the same area of each of the yield data, the taste data, the growth data, the soil data, the variable fertilization data, the automatic traveling data, and the work history data.

The display portion 82 displays a predetermined agricultural map related to the work plan among a plurality of the agricultural maps. The display controller portion 97 causes the external terminal 15 to display a predetermined agricultural map related to creation of the work plan among the plurality of agricultural maps. In this manner, it becomes easy to know the relation between the agricultural map and the work plan. For example, when the agricultural work is included in the work plan, the operator can easily watch the agricultural map related to the agricultural work.

The display portion 82 includes the first area M21 that displays at least the external information transmitted from the agriculture support device 90 and includes the second area M22 that displays at least the internal information different from the external information, and the plurality of agricultural maps are displayed in the first area M21. In this manner, the agricultural map is displayed in the first area M21 in which the external information is displayed while the internal information and the external information are distinguished, so that the operator can easily check the agricultural map. For example, when the internal information is information on the setting of the agriculture machine and the like, the setting of the agriculture machine can be performed while watching the agricultural map.

The agriculture machine has the communicator device 60A configured to transmit, to the agriculture support device 90, the operation result of the agriculture machine obtained when the agricultural work is performed based on the work plan displayed on the display device 80. The agriculture support device 90 has the result storage portion 99 configured to store the work result that is transmitted by the communicator device 60A. According to that configuration, it is possible to leave the work results of the executed work on the agriculture support device 90 side while watching the work plan.

In the embodiment mentioned above, the work plan screen M3 of the display device 80 displays the work plan (the agricultural work, the model number of the agriculture machine, the model, the name, the work date, the scheduled traveling route R1, the work width, the lapping width). However, the work plan may be corrected by the display device 80. For example, the display device 80 includes the corrector portion 89. The corrector portion 89 is constituted of electrical/electronic components provided in the display device 80, computer programs stored in the display device 80, or the like. When a predetermined operation is performed on the display device 80, for example, when a correction button displayed on the work plan screen M3 is selected, the corrector portion 89 allows the work plan to be corrected. When the correction of the work plan by the corrector portion 89 is permitted, the corrector portion 89 accepts the input of the work plan inputted by operation of the display device 80, and rewrites any one of the agricultural work, the model number of the agriculture machine, the model, the name, the work date, and the scheduled traveling route R1, the work width, and the lapping width into the newly inputted contents. After the correction of the work plan, the corrector portion 89 transmits the corrected work plan to the communicator device 60A together with information representing that the work plan has been corrected. The communicator device 60A transmits the corrected work plan to the support device 90. The communicator portion 95 of the support device 90 receives the corrected work plan, and the support device 90 stores the corrected work plan received above.

In the above description, the embodiment of the present invention has been explained. However, all the features of the embodiment disclosed in this application should be considered just as examples, and the embodiment does not restrict the present invention accordingly. A scope of the present invention is shown not in the above-described embodiment but Z is defined by the appended claims.

When the work plan is created, unique identification information (for example, ID) corresponding to a created work plan may be issued. For example, in the case where a work represented in a work plan is performed by an agriculture machine such as a tractor, the identification information corresponding to the work plan is assigned to the work history data (the work history map) and managed, so that it is possible to know which work the work history data (the work history map) corresponds to.

### [DESCRIPTION OF THE REFERENCE NUMERAL]

- 80: Display device
- 81: Plan obtaining portion
- 82: Display portion
- 83: Machine information obtaining portion
- 84: Evaluator portion
- 87: Operation judgment portion
- 89: Corrector portion
- 90: Agriculture support device
- 91: Work creator portion
- 95: Communicator portion

## Claims

1. An agriculture support system comprising:
- an agriculture support device (90) having:
- a work creator portion (91) configured to create a work plan of an agricultural work to be performed by an agriculture machine (1); and
- a communicator portion (95) configured to transmit the work plan from the work creator portion (91); and
- a display device (80) configured to be provided in the agriculture machine (1),
whereby
- the display device (80) has
- a machine information obtaining portion (83) configured to obtain machine information of the agriculture machine (1);
- a plan obtaining portion (81) configured to obtain the work plan transmitted from the communicator portion (95);
- an evaluator portion (82) configured to compare the work plan with the machine information obtained by the machine information obtaining portion (83) and to evaluate execution of the work plan; and
- a display portion (82) configured to display an evaluation result provided by the evaluator portion (84);
- the evaluator portion (84) evaluates whether it is possible to carry out the work plan based on the machine information of a working device (2) provided in the agriculture machine (1);
- the display portion (82) displays the machine information and the evaluation result showing whether it is possible to carry out the work plan; **characterized in that** Z
- the display device (80) has a work judgment portion (87) configured such that, if the evaluator portion (84) determines that it is possible to carry out the work plan, when a notification of an end of the agricultural work is given by performing a predetermined operation on the display device (80), the work judgment portion (87) determines, during the agricultural work by the agriculture machine (1), whether the agricultural work in the work plan has been completed by the agriculture machine (1) with respect to an agricultural field in the work plan, based at least on a traveling trajectory (114) of the agriculture machine (1) that has traveled;
- if the work judgment portion (87) determines that the agricultural work in the work plan has been completed by the agriculture machine (1), the display portion (82) displays that the agricultural work has been completed in accordance with the work plan, and, after the work plan is displayed on the display portion (82), the display device (80) transmits a work record of the agriculture machine (1) for the work plan to the agricultural support device (90); and
- if the work judgment portion (87) determines that the agricultural work in the work plan has not been completed by the agriculture machine (1), the display portion (82) displays that the agricultural work has not been completed in accordance with the work plan, and the display device (80) does not transmit the work record of the agriculture machine (1) for the work plan to the agricultural support device (90).

2. The agriculture support system according to claim 1, wherein the work judgment portion (87)
- compares, in the agricultural field in the work plan, an area (S1) of a work area (H5) in which work is performed and an execution area (S2) obtained from the traveling trajectory (114) of the agriculture machine (1) and a work width of the agriculture machine (1),
- if the area (S1) of the work area (H5) is not larger than the execution area (S2), determines that the agricultural work in the work plan has been completed by the agriculture machine (1), and
- if the area (S1) of the work area (H5) is larger than the execution area (S2), determines that the agricultural work in the work plan has not been completed by the agriculture machine (1).

3. The agriculture support system according to claim 1, wherein the work judgment portion (87)
- compares, in the agricultural field in the work plan, an execution width (W2) obtained by adding a work width of the agriculture machine (1) to an outermost one of straight traveling portions (R2) in the traveling trajectory (114) of the agriculture machine (1) and a width (W1), in a direction along which the straight traveling portions (R2) of the traveling trajectory (114) are arranged, of a work area (H5) in which work is performed,
- if the width (W1) of the work area (H5) is not larger than the execution width (W2), determines that the agricultural work in the work plan has been completed by the agriculture machine (1), and
- if the width (W1) of the work area (H5) is larger than the execution width (W2), determines that the agricultural work in the work plan has not been completed by the agriculture machine (1).

4. The agriculture support system according to any one of claims 1 to 3,
- wherein the display portion (82) includes:
- a first area (M21) configured to display outside information transmitted from the agriculture support device (90); and
- a second area (M22) configured to display inside information different from the outside information,
- and wherein the first area (M21) displays the evaluation result provided by the evaluator portion (84).

5. The agriculture support system according to any one of claims 1 to 4, wherein the display device (80) displays a position where the agricultural work is interrupted when the agricultural work is performed by the agriculture machine (1) in accordance with the work plan.

6. The agriculture support system according to any one of claims 1 to 5,
- wherein the display device (80) has a corrector portion (89) to correct the work plan displayed on the display portion (82),
- and wherein the communication portion (95) receives the work plan corrected by the corrector portion (89).

## Patentansprüche

1. Landwirtschaftliches Unterstützungssystem umfassend:
- eine Landwirtschaftsunterstützungsvorrichtung (90), die Folgendes aufweist:
- einen Arbeitserstellungsteil (91), der eingerichtet ist, einen Arbeitsplan einer landwirtschaftlichen Arbeit zu erstellen, die von einer landwirtschaftlichen Maschine (1) durchzuführen ist; und
- einen Kommunikationsteil (95), der eingerichtet ist, den Arbeitsplan von dem Arbeitserstellungsteil (91) zu übertragen; und
- eine Anzeigevorrichtung (80), die eingerichtet ist, in der landwirtschaftlichen Maschine (1) bereitgestellt zu werden,
wobei
- die Anzeigevorrichtung (80)
- einen Maschineninformationsgewinnungsteil (83), der eingerichtet ist, Maschineninformationen der landwirtschaftlichen Maschine (1) zu gewinnen;
- einen Planerhaltungsteil (81), der eingerichtet ist, um den Arbeitsplan zu erhalten, der von dem Kommunikationsteil (95) übertragen wird;
- einen Einschätzungsteil (84), der eingerichtet ist, den Arbeitsplan mit den Maschineninformationen zu vergleichen, die von dem Maschineninformationsgewinnungsteil (83) gewonnen werden, und eine Ausführung des Arbeitsplans einzuschätzen; und
- einen Anzeigeteil (82), der eingerichtet ist, ein Einschätzungsergebnis, das von dem Einschätzungsteil (84) bereitgestellt wird, anzuzeigen, aufweist;
- der Einschätzungsteil (84) einschätzt, ob es möglich ist, den Arbeitsplan basierend auf den Maschineninformationen einer Arbeitsvorrichtung (2) auszuführen, die in der landwirtschaftlichen Maschine (1) bereitgestellt ist;
- der Anzeigeteil (82) die Maschineninformationen und das Einschätzungsergebnis, das zeigt, ob es möglich ist, den Arbeitsplan auszuführen, anzeigt; **dadurch gekennzeichnet, dass**
- die Anzeigevorrichtung (80) einen Arbeitsbeurteilungsteil (87) aufweist, der derart eingerichtet ist, dass, falls der Einschätzungsteil (84) bestimmt, dass es möglich ist, den Arbeitsplan auszuführen, wenn eine Benachrichtigung eines Endes der landwirtschaftlichen Arbeit durch Durchführen einer vorbestimmten Betätigung auf der Anzeigevorrichtung (80) gegeben ist, der Arbeitsbeurteilungsteil (87) während der landwirtschaftlichen Arbeit durch die landwirtschaftliche Maschine (1) basierend zumindest auf einem Fahrweg (114) der landwirtschaftlichen Maschine (1), die gefahren ist, bestimmt, ob die landwirtschaftliche Arbeit in dem Arbeitsplan von der landwirtschaftlichen Maschine (1) in Bezug auf ein landwirtschaftliches Feld in dem Arbeitsplan abgeschlossen wurde;
- wenn der Arbeitsbeurteilungsteil (87) bestimmt, dass die landwirtschaftliche Arbeit in dem Arbeitsplan von der landwirtschaftlichen Maschine (1) abgeschlossen wurde, der Anzeigeteil (82) anzeigt, dass die landwirtschaftliche Arbeit gemäß dem Arbeitsplan abgeschlossen wurde, und, nachdem der Arbeitsplan auf dem Anzeigeteil (82) angezeigt wird, die Anzeigevorrichtung (80) eine Arbeitsaufzeichnung der landwirtschaftlichen Maschine (1) für den Arbeitsplan zu der Landwirtschaftsunterstützungsvorrichtung (90) überträgt; und
- wenn der Arbeitsbeurteilungsteil (87) bestimmt, dass die landwirtschaftliche Arbeit in dem Arbeitsplan nicht von der landwirtschaftlichen Maschine (1) abgeschlossen wurde, der Anzeigeteil (82) anzeigt, dass die landwirtschaftliche Arbeit nicht gemäß dem Arbeitsplan abgeschlossen wurde, und die Anzeigevorrichtung (80) die Arbeitsaufzeichnung der landwirtschaftlichen Maschine (1) für den Arbeitsplan nicht zu der Landwirtschaftsunterstützungsvorrichtung (90) überträgt.

2. Landwirtschaftliches Unterstützungssystem nach Anspruch 1, wobei der Arbeitsbeurteilungsteil (87)
- in dem landwirtschaftlichen Feld in dem Arbeitsplan einen Bereich (S1) eines Arbeitsbereichs (H5), in welchem Arbeit durchgeführt wird, und einen Ausführungsbereich (S2), der anhand des Fahrwegs (114) der landwirtschaftlichen Maschine (1) und einer Arbeitsbreite der landwirtschaftlichen Maschine (1) erhalten wird, vergleicht,
- wenn der Bereich (S1) des Arbeitsbereichs (H5) nicht größer als der Ausführungsbereich (S2) ist, bestimmt, dass die landwirtschaftliche Arbeit in dem Arbeitsplan von der landwirtschaftlichen Maschine (1) abgeschlossen wurde, und
- wenn der Bereich (S1) des Arbeitsbereichs (H5) größer als der Ausführungsbereich (S2) ist, bestimmt, dass die landwirtschaftliche Arbeit in dem Arbeitsplan nicht von der landwirtschaftlichen Maschine (1) abgeschlossen wurde.

3. Landwirtschaftliches Unterstützungssystem nach Anspruch 1, wobei der Arbeitsbeurteilungsteil (87)
- in dem landwirtschaftlichen Feld in dem Arbeitsplan eine Ausführungsbreite (W2), die durch Hinzufügen einer Arbeitsbreite der landwirtschaftlichen Maschine (1) zu einem äußersten von geraden Fahrabschnitten (R2) in dem Fahrweg (114) der landwirtschaftlichen Maschine (1) erhalten wird, und eine Breite (W1) in einer Richtung, entlang welcher die geraden Fahrabschnitte (R2) des Fahrwegs (114) angeordnet sind, eines Arbeitsbereichs (H5), in welchem Arbeit durchgeführt wird, vergleicht,
- wenn die Breite (W1) des Arbeitsbereichs (H5) nicht größer als die Ausführungsbreite (W2) ist, bestimmt, dass die landwirtschaftliche Arbeit in dem Arbeitsplan von der landwirtschaftlichen Maschine (1) abgeschlossen wurde, und
- wenn die Breite (W1) des Arbeitsbereichs (H5) größer als die Ausführungsbreite (W2) ist, bestimmt, dass die landwirtschaftliche Arbeit in dem Arbeitsplan nicht von der landwirtschaftlichen Maschine (1) abgeschlossen wurde.

4. Landwirtschaftliches Unterstützungssystem nach einem der Ansprüche 1 bis 3,
- wobei der Anzeigeteil (82) Folgendes aufweist:
- einen ersten Bereich (M21), der eingerichtet ist, Außenseiteninformationen anzuzeigen, die von der Landwirtschaftsunterstützungsvorrichtung (90) übertragen werden; und
- einen zweiten Bereich (M22), der eingerichtet ist, Innenseiteninformationen anzuzeigen, die sich von den Außenseiteninformationen unterscheiden,
- und wobei der erste Bereich (M21) das Einschätzungsergebnis anzeigt, das von dem Einschätzungsteil (84) bereitgestellt wird.

5. Landwirtschaftliches Unterstützungssystem nach einem der Ansprüche 1 bis 4, wobei die Anzeigevorrichtung (80) eine Position anzeigt, wo die landwirtschaftliche Arbeit unterbrochen wird, wenn die landwirtschaftliche Arbeit von der landwirtschaftlichen Maschine (1) gemäß dem Arbeitsplan durchgeführt wird.

6. Landwirtschaftliches Unterstützungssystem nach einem der Ansprüche 1 bis 5,
- wobei die Anzeigevorrichtung (80) einen Korrekturteil (89) zum Korrigieren des Arbeitsplans aufweist, der auf dem Anzeigeteil (82) angezeigt wird,
- und wobei der Kommunikationsteil (95) den Arbeitsplan empfängt, der von dem Korrekturteil (89) korrigiert wird.

## Revendications

1. Système d'assistance à l'agriculture comprenant :
- un dispositif d'assistance à l'agriculture (90) comportant :
- une partie de création de travail (91) configurée pour créer un plan de travail d'un travail agricole devant être effectué par une machine agricole (1) ; et
- une partie de communication (95) configurée pour transmettre le plan de travail à partir de la partie de création de travail (91) ; et
- un dispositif d'affichage (80) configuré pour être prévu dans la machine agricole (1), moyennant quoi le dispositif d'affichage (80) comporte
- une partie d'obtention d'informations de machine (83) configurée pour obtenir des informations de machine de la machine agricole (1);
- une partie d'obtention de plan (81) configurée pour obtenir le plan de travail transmis depuis la partie de communication (95) ;
- une partie d'évaluation (84) configurée pour comparer le plan de travail avec les informations de machine obtenues par la partie d'obtention d'informations de machine (83) et pour évaluer l'exécution du plan de travail ; et
- une partie d'affichage (82) configurée pour afficher un résultat d'évaluation fourni par la partie d'évaluation (84) ;
- la partie d'évaluation (84) évalue s'il est possible d'exécuter le plan de travail sur la base des informations de machine d'un dispositif de travail (2) prévu dans la machine agricole (1) ;
- la partie d'affichage (82) affiche les informations de la machine et le résultat de l'évaluation montrant s'il est possible d'exécuter le plan de travail ; **caractérisé en ce que**
- le dispositif d'affichage (80) comporte une partie d'estimation du travail (87) configurée de telle sorte que, si la partie d'évaluation (84) détermine qu'il est possible d'exécuter le plan de travail, lorsqu'une notification de fin de travail agricole est donnée en effectuant une opération prédéterminée sur le dispositif d'affichage (80), la partie d'estimation du travail (87) détermine, pendant le travail agricole effectué par la machine agricole (1), si le travail agricole dans le plan de travail a été terminé par la machine agricole (1) par rapport à un champ agricole dans le plan de travail, sur la base au moins d'une trajectoire de déplacement (114) de la machine agricole (1) qui s'est déplacée ;
- si la partie d'estimation du travail (87) détermine que le travail agricole dans le plan de travail a été réalisé par la machine agricole (1), la partie d'affichage (82) affiche que le travail agricole a été réalisé conformément au plan de travail, et, une fois le plan de travail affiché sur la partie d'affichage (82), le dispositif d'affichage (80) transmet un enregistrement de travail de la machine agricole (1) pour le plan de travail au dispositif d'assistance à l'agriculture (90) ; et
- si la partie d'estimation du travail (87) détermine que le travail agricole dans le plan de travail n'a pas été terminé par la machine agricole (1), la partie d'affichage (82) affiche que le travail agricole n'a pas été terminé conformément au plan de travail, et le dispositif d'affichage (80) ne transmet pas l'enregistrement de travail de la machine agricole (1) pour le plan de travail au dispositif d'assistance à l'agriculture (90).

2. Système d'assistance à l'agriculture selon la revendication 1, dans lequel la partie d'estimation du travail (87)
- compare, dans le champ agricole du plan de travail, une zone (S1) d'une zone de travail (1-15), dans lequel le travail est effectué et une zone d'exécution (S2) obtenue à partir de la trajectoire de déplacement (114) de la machine agricole (1) et une largeur de travail de la machine agricole (1),
- si la zone (S1) de la zone de travail (H5) n'est pas plus grande que la zone d'exécution (S2), détermine que le travail agricole dans le plan de travail a été réalisé par la machine agricole (1), et
- si la surface (S1) de la zone de travail (H5) est plus grande que la zone d'exécution (S2), détermine que le travail agricole dans le plan de travail n'a pas été terminé par la machine agricole (1).

3. Système d'assistance à l'agriculture selon la revendication 1, dans lequel la partie d'estimation du travail (87)
- compare, dans le champ agricole dans le plan de travail, une largeur d'exécution (W2) obtenue en additionnant une largeur de travail de la machine agricole (1) à une partie de déplacement droite (R2) la plus externe dans la trajectoire de déplacement (114) de la machine agricole (1) et une largeur (W1), dans une direction le long de laquelle les parties de déplacement droites (R2) de la trajectoire de déplacement (114) sont disposées, d'une zone de travail (H5) dans laquelle le travail est effectué,
- si la largeur (WI) de la zone de travail (H5) n'est pas plus grande que la largeur d'exécution (W2), détermine que les travaux agricoles dans le plan de travail ont été terminés par la machine agricole (1), et
- si la largeur (WI) de la zone de travail (H5) est plus grande que la largeur d'exécution (W2), détermine que le travail agricole dans le plan de travail n'a pas été terminé par la machine agricole (1).

4. Système d'assistance à l'agriculture selon une quelconque des revendications 1 à 3,
- dans lequel la partie d'affichage (82) comprend :
- une première zone (M21) configurée pour afficher des informations extérieures transmises depuis le dispositif d'assistance à l'agriculture (90); et
- une deuxième zone (M22) configurée pour afficher des informations internes différentes des informations externes,
- et dans lequel la première zone (M21) affiche le résultat d'évaluation fourni par la partie d'évaluation (84).

5. Système d'assistance à l'agriculture selon une quelconque des revendications 1 à 4, dans lequel le dispositif d'affichage (80) affiche une position où le travail agricole est interrompu lorsque le travail agricole est effectué par la machine agricole (1) conformément au plan de travail.

6. Système d'assistance à l'agriculture selon une quelconque des revendications 1 à 5,
- dans lequel le dispositif d'affichage (80) comporte une partie correctrice (89) pour corriger le plan de travail affiché sur la partie d'affichage (82),
- et dans lequel la partie de communication (95) reçoit le plan de travail corrigé par la partie correctrice (89).
